(19) Europäisches Patentamt

European Patent Office

Office européen des brevets

(11) Veröffentlichungsnummer: **0 180 154 B1**

(12) **EUROPÄISCHE PATENTSCHRIFT**

(45) Veröffentlichungstag der Patentschrift: **24.04.91**

(21) Anmeldenummer: **85113549.1**

(22) Anmeldetag: **24.10.85**

(51) Int. Cl.⁵: **F16C 32/06**

(54) **Aerostatisches Lager.**

(30) Priorität: **30.10.84 DE 3439648**

(43) Veröffentlichungstag der Anmeldung:
**07.05.86 Patentblatt 86/19**

(45) Bekanntmachung des Hinweises auf die
Patenterteilung:
**24.04.91 Patentblatt 91/17**

(84) Benannte Vertragsstaaten:
**AT CH DE FR GB IT LI NL SE**

(56) Entgegenhaltungen:
**EP-A- 0 061 016      DE-A- 3 013 659**
**DE-A- 3 230 232      DE-A- 3 421 858**
**DE-C- 661 071        GB-A- 1 263 054**
**US-A- 4 409 054**

**Werkstattstechnik - Z. ind. Fertig. 61 (1971),
S. 616, 617**

(73) Patentinhaber: **Heinzl, Joachim, Prof. Dr.-Ing.
Dreisesselbergstrasse 16
W-8000 München 90(DE)**

Patentinhaber: **Zehentbauer, Hans
Goethestrasse 15
W-8034 Germering(DE)**

Patentinhaber: **Lehmann, Manfred
Edelweissstrasse 114
W-8039 Puchheim(DE)**

(72) Erfinder: **Heinzl, Joachim, Prof. Dr. Ing.
Dreisesselbergstrasse 16
W-8000 München 90(DE)**
Erfinder: **Lehmann, Manfred
Edelweissstrasse 114
W-8039 Puchheim(DE)**
Erfinder: **Zehenbauer, Hans
Goethestrasse 15
W-8034 Germering(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Herstellung eines Lagerkörpers für ein Gaslager gemäß dem Oberbegriff des Anspruchs 1, wie es aus der DE-A-3230232 bekannt ist.

Eine Vielzahl von Druckschriften befaßt sich mit Gaslagern, deren Lagerkörper aus gesintertem Material bestehen.

Eine grundsätzliche Abhandlung derartiger Lager findet man in einem Aufsatz von "Schmidt" (wt-Z. ind. Fertig. 61 (1971), S. 616, 617). Darüber hinaus sind in der DE-A-31 10 712 poröse Luftlager mit gezielt verdichteten Oberflächen beschrieben.

Aus der GB-A-1 263 054 ist es bekannt, bei porösen Gaslagern die Lageroberfläche mit sehr hoher Genauigkeit durch spanende Bearbeitungsverfahren herzustellen.

In der DE-A-30 13 659 ist eine Technologie beschrieben, die sich auf die Herstellung von porösen Sinterkörpern allgemein bezieht.

Diese Druckschriften sind nur als Beispiele für den umfangreichen Stand der Technik genannt.

In der Praxis sind verschiedene Bauformen für poröse Gaslager bekannt geworden:

a) Gaslager, bei denen die Speiseluft beim Strömen durch die gesamte Sinterfläche mit insgesamt geringer Porosität gedrosselt wird. Der Strömungswiderstandist im gesamten Material konstant und hoch. Hierbei ergeben sich sehr hohe Toleranzanforderungen an den Sinterrohling, wenn die Lagerfläche wenig bearbeitet werden soll.

Als Ausgangsmaterial werden Sintermetalle und Kunstkohle verwendet.

b) Gaslager, bei denen Speiseluft an der Lagerfläche gedrosselt wird. Zur Erzielung dieser Drosselung werden die vorbearbeiteten Lageroberflächen des Sintermaterials durch Schleifen mit losem Korn unter Druck verdichtet. Hierbei kann nur die gesamte Lagerfläche gleichzeitig bearbeitet werden. Es kann keine sichere Aussage bezüglich der nach dem Schleifen verbleibenden Restdicke und der mechanischen Stabilität der obersten Körnerschicht getroffen werden. Die verbleibenden Drosselöffnungen sind an der Lageroberfläche ungleichmäßig verteilt. Im Bereich der Lagerfläche können Reste des losen Schleifkorns im Sintermaterial eingelagert sein.

c) Gaslager, bei denen als Drosselelemente dünne Düsenplatten auf ein der Speiseluftzuführung dienendes poröses Grundmaterial aufgebracht werden.

Der Erfindung liegt die Aufgabe zugrunde, die Lager so zu gestalten, daß sie gegenüber dem Stand der Technik eine höhere Steifigkeit besitzen, und daß die Betriebssicherheit für eine hohe Einsatzdauer gewährleistet ist. Vor allem soll die Herstellung der Lager mit einem wirtschaftlichen Fertigungsverfahren erfolgen können.

Dabei ist es zur Erzielung einer hohen Tragkraft und einer optimalen Steifigkeit notwendig, die Lufteinspeisung in das Lager mit möglichst vielen sehr kleinen Öffnungen gleichmäßig über die ganze Lagerfläche zu verteilen, damit überall tragender Druck aufgebaut wird. Bei der Einspeisung müßte eine Drosselung, d.h. ein massenstromabhängiger Druckabfall stattfinden, damit eine Spaltänderung eine hohe Kraftänderung zur Folge hätte. Dadurch wird eine hohe Steifigkeit gewährleistet. Die Drosselung sollte unmittelbar beim Eintritt der Luft in den Lagerspalt stattfinden, damit stabilitätsschädliche Totvolumina so klein wie möglich gehalten werden. Dagegen sollte der Strömungswiderstand im Grundgefüge (vor den Drosseln im Lagermaterial) gering sein, damit der zur Aufrechterhaltung des tragenden Luftpolsters notwendige Massenstrom ungehindert nachgeführt werden kann.

Diese Aufgabe wird durch ein Verfahren mit den kennzeichnenden Merkmalen des Anspruchs 1 gelöst.

Die besonderen Vorteile der Erfindung liegen darin, daß sich die dünne Drosselschicht direkt an der Lageroberfläche befindet, so daß die Forderung nach geringem Totvolumen nach den Drosselöffnungen erfüllt ist.

Die Vielzahl feinster Poren ergibt eine gleichmäßig über die Lagerfläche verteilte Lufteinspeisung und damit eine hohe Tragkraft bei geringem Luftverbrauch. Da die tragende Struktur nicht verdichtet wird, ist der Strömungswiderstand im Grundgefüge gering, d.h. die Luft wird gleichmäßig nachgeführt, das Lagerverhalten ist stabil.

Die entstehende wabenförmige Struktur der Lageroberfläche zeichnet sich dadurch aus, daß die Sinterkörner der Oberflächenschicht sehr stark gegeneinander gequetscht werden.Dadurch sind die Kontaktstellen zu den Nachbarkörnern sehr stark vergrößert, so daß ein sehr stabiler Verbund in der Oberfläche entsteht. Die ursprünglich vorhandene Zahl der Kontaktstellen wird durch das Bearbeitungsverfahren nicht verändert. Es kann keine angeschnittenen Sinterpartikel geben, die nur noch an einer geschwächten Kontaktstelle hängen und sich im Betrieb lösen.

Ausgehend von einfach herzustellenden Sinterrohlingen wird durch Walzen in einem Arbeitsgang die Oberfläche so verdichtet, daß sowohl die gewünschten feinsten, gleichmäßig verteilten Düsenöffnungen entstehen, als auch die Formgenauigkeit der Lageroberfläche sehr gut angenähert wird. Durch Austauschen des Walzwerkzeuges gegen ein spanabhebendes Werkzeug (Schneiddiamanten) kann auf geeigneten Maschinen in einer Aufspannung die erforderliche Luftlagergenauigkeit erreicht werden. Der für optimale Tragkraft und Steifigkeit erforderliche Massendurchsatz durch die Lageroberfläche läßt sich bei der Bearbeitung kontrollieren. Das Gegenstück des Luftlagers, das keine Düsenöffnungen enthalten muß, kann leicht angepaßt werden.

Mit Hilfe eines Ausführungsbeispiels soll die Erfindung anhand stark schematisierter Zeichnungen noch näher erläutert werden.

Es zeigt

Figur 1    einen Sinterrohling vor der Bearbeitung,

Figur 2    das Sinterteil gemäß Figur 1 nach dem Walzen und

Figur 3    das gemäß Figur 2 gewalzte Sinterteil nach der spanenden Feinstbearbeitung.

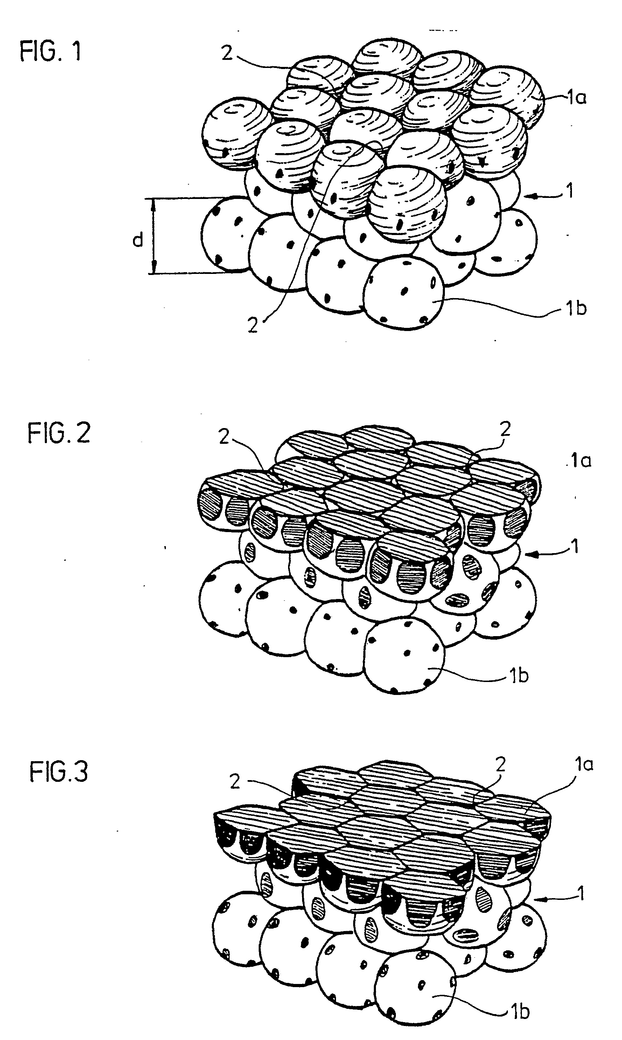

Der in Figur 1 schematisch und stark vergrößert dargestellte Ausschnitt eines Sinterkörpers 1 stellt den unbearbeiteten Sinterrohling dar.

Für einen stabilen Aufbau der Lagerrohlinge sollen die Sinterkörner 1a, 1b möglichst dicht angeordnet sein. An der späteren Lageroberflächen sollen die Sinterkörner 1a in dichtester Anordnung verteilt sein, um "Löcher" zu vermeiden.

Beim Füllen der Sinterform wird daher die spätere Lageroberfläche zuerst mit Sinterkörnern 1a bedeckt. In einer weiteren Ausgestaltung des Sinterrohlings könnte diese Oberflächenschicht auch aus kleineren, als den hier dargestellten Sinterkörnern 1a aufgebaut sein; das tragende Grundgefüge kann mit Sinterkörnern 1b einer gröberen Körnung ausgebildet sein.

Für eine hohe Steifigkeit und Tragkraft ist - wie bereits erwähnt - eine große Anzahl gleichmäßig verteilter Poren 2 direkt an der Lageroberfläche notwendig.

Bei der erfindungsgemäßen Gestaltung werden dazu die Sinterkörner 1a der obersten Schicht durch plastisches Aneinanderwalzen so verformt, daß eine Oberfläche entsteht, die eine wabenförmige Struktur mit vielen gleichmäßig verteilten feinsten Poren 2 in den Wabenecken aufweist, wie in Figur 2 gezeigt ist.

Die gewünschte Verdichtung zum Erreichen der Drosselwirkung bis zu einer optimalen Restdüsenfläche läßt sich durch Messung des Massendurchsatzes durch die Lageroberfläche gezielt erreichen. Die Verdichtung durch Walzen kann so weit fortgesetzt werden, bis die Lageroberfläche vollständig verschlossen ist.

Damit ist es möglich, in der Lageroberfläche einzelne Bereiche ganz zu verschließen, an anderen Bereichen dagegen gezielt Düsenöffnungen in Form von Poren 2 noch offen zu lassen. Bei der plastischen Verformung der Sinterkörner 1a durch Walzen kann das Werkzeug je nach der Führung des Wälzkörpers über die Oberfläche rollen und/oder gleiten. In Versuchen haben sich Anordnungen bewährt, bei denen die Kante eines Kugellagers leicht schräg gestellt über die Oberfläche geführt wird, so daß bei hoher Flächenpressung der Rollbewegung ein Gleitanteil überlagert ist.

Nach dem Walzen kann die spanende Feinbearbeitung stattfinden, was durch Fräsen oder Drehen mit Diamantwerkzeugen erfolgt. Damit ist ohne weiteres die für Luftlager erforderliche Maßgenauigkeit zu erzielen.

Mit der Erfindung werden auch die erforderlichen Maßtoleranzen leichter beherrschbar. Als Ausgangsmaterial dienen Sinterrohlinge, deren Maßhaltigkeit stark von Sintertemperatur, -druck und -dauer abhängig ist. Übliche Abweichungen liegen im Bereich von 2 - 5 % des Nennmaßes. Die Gestaltabweichung der Ausgangsfläche liegt bei etwa einem Korndurchmesser d. Beim Verdichten durch Walzen wird die Gestaltabweichung auf $^d/10$ verbessert. Durch Fräsen oder Drehen mit Diamantwerkzeugen wird die Gestaltabweichung auf $^d/100$ reduziert und erreicht, daß die Lageroberfläche etwa in der Mitte der obersten Körnerschicht entsteht, wie aus Figur 3 ersichtlich ist. Aus Figur 3 ist auch die eingangs bereits erwähnte mechanische Stabilität der Lageroberfläche ersichtlich: Die Kontaktstellen zu den benachbarten Sinternkörnern 1a und 1b sind durch den Walzvorgang stark vergrößert, so daß ein sehr stabiler Verbund in der Oberfläche entsteht. Die ursprüngliche Zahl der Kontaktstellen wird durch die spanende Bearbeitung nicht verringert. Es kann keine stark angeschnittenen Sinterkörner 1a geben, die nur noch an einer geschwächten Kontaktstelle im Verbund hängen und sich im Betrieb lösen könnten.

Trotz allem wird die Luftführung durch das Grundgefüge nicht behindert.

**Ansprüche**

1.    Verfahren zur Herstellung eines aus gesintertem Material bestehenden Lagerkörpers eines Gaslagers, bei dem wenigstens eine der Lageroberflächen gezielt verdichtet ist, so daß die Sinterkörner (1a) der Lageroberfläche des Sinterkörpers (1) wabenförmig geformt sind und an den Wabenecken feinste Poren (2) entstehen, **dadurch gekennzeichnet**, daß die der späteren Lageroberfläche entsprechende Schicht von Sinterkörnern (1a) so in eine Sinterform eingebracht wird, daß diese Schicht die höchste Packungsdichte an Sinterkörnern (1a) aufweist, wobei in diese Schicht Sinterkörner (1a) mit geringerer Korngröße eingebracht werden, als beim übrigen Sinterkörper und daß die erforderliche Formgenauigkeit der Lageroberfläche nach dem Verdichten durch spanabhebende Bearbeitungsverfahren wie Drehen oder Fräsen erzielt wird, wobei die deformierten Sinterkörner (1a) maximal bis zum halben Korndurchmesser abgeschnitten werden.

2. Verfahren zur Herstellung eines Sinterkörpers nach Anspruch 1, dadurch gekennzeichnet, daß die gezielte Deformierung der Sinterkörner (1a) der Lageroberflächenschicht des Sinterkörpers (1) durch Walzen erfolgt.

3. Verfahren zur Herstellung eines Sinterkörpers nach Anspruch 2, dadurch gekennzeichnet, daß der Rollbewegung beim Walzen eine geringe Gleitbewegung überlagert wird.


**Claims**

1. A process for manufacturing a bearing box consisting of sintered material for an aerostatic bearing, in which at least one of the bearing surfaces is intentionally compressed, so that the sinter granules (1a) of the bearing surface of the sinter member (1) are of a honeycomb shape, and microfine pores (2) result at the corners of the honeycomb cells, characterised in that the layer of sinter granules (1a), corresponding to the subsequent bearing surface, is inserted into a sintering mould in such a way that this layer possesses the maximum packed density of sinter granules (1a), sinter granules (1a) of smaller granule size than in the rest of the sinter member being brought into this layer, and that the necessary precision of shape of the bearing surface is obtained, after the compression, by chip-removing treatments such as turning or milling, the deformed sinter granules (1a) being cut back to a maximum of half their diameter.

2. A process for manufacturing a sinter member according to Claim 1, characterised in that the intentional deformation of the sinter granules (1a) on the bearing surface layer of the sinter member (1) is obtained by rolling.

3. A process for manufacturing a sinter member according to Claim 2, characterised in that a slight sliding movement is superimposed on the rolling movement during the rolling operation.


en matériau fritté d'un palier à gaz, suivant lequel au moins l'une des surfaces de portée est densifiée de façon que les grains frittés (1a) de la surface de portée du corps fritté (1) soient déformés de façon contrôlée en nids d'abeilles et que des pores (2) très fins se forment aux angles des nids d'abeilles, caractérisé par le fait que la couche de grains (1a) correspondant à la surface de portée ultérieure est introduite dans un moule de frittage de telle manière que cette couche présente la densité la plus élevée de grains (1a), et que les grains (1a) introduits dans cette couche présentent une grosseur plus faible que dans le corps fritté restant, et que la précision de forme nécessaire de la surface de portée est obtenue, après la densification, par un usinage par enlèvement de copeaux tel que tournage ou fraisage, les grains frittés déformés (1a) étant coupés au maximum jusqu'à la moitié du diamètre des grains.

2. Procédé pour la fabrication d'un corps fritté suivant la revendication 1, caractérisé par le fait que la déformation contrôlée des grains frittés (la) de la couche de la surface de portée du corps fritté (1) s'effectue par laminage.

3. Procédé pour la fabrication d'un corps fritté suivant la revendication 2, caractérisé par le fait qu'un léger mouvement de glissement est superposé au mouvement de roulement lors du laminage.


**Revendications**

1. Procédé de fabrication d'un corps de portée

FIG. 1

FIG.2

FIG.3